# EUROPÄISCHE PATENTANMELDUNG

(11) **EP 0 999 120 A2**
(43) Veröffentlichungstag der Anmeldung: **10.05.2000**
(21) Anmeldenummer: 99118629.7
(22) Anmeldetag: 21.09.1999
(51) Int. Cl.: B62J 11/00

(54) **Trinkflaschenhalter für Fahrräder**

(30) Priorität: 06.11.1998 DE 19851260
(71) Anmelder: Centurion Renner KG, 71106 Magstadt (DE)
(72) Erfinder: Renner, Wolfgang, 71106 Magstadt (DE); Falke, Jürgen, 71634 Ludwigsburg (DE)
(74) Vertreter: Pfiz, Thomas

(57) **Zusammenfassung**

Die Erfindung betrifft einen Trinkflaschenhalter für Fahrräder mit einem an einem Fahrradrahmen (12) befestigbaren langgestreckten Basisteil (16) und einem mit dem Basisteil (16) verbundenen Halteteil (18) zur vorzugsweise klemmenden mantelseitigen Halterung einer auf dem Basisteil (16) abstützbaren Trinkflasche (10). Um die Benutzung auch an Fahrradrahmen mit engem Rahmen zu erleichtern, wird vorgeschlagen, daß das Halteteil durch einen die Trinkflasche (10) in Umfangsrichtung um mehr als 180° umspannenden bogenförmigen Klemmbügel (18) gebildet ist, welcher an einem seiner Enden (44,46) fest mit einem Zentralabschnitt (20) des Basisteils (16) verbunden ist, so daß die Trinkflasche (10) an der zwischen dem freien Ende (46) des Klemmbügels (18) und dem Basisteil (16) freigehaltenen Bügelöffnung (48) quer zur Ebene des Fahrradrahmens (12) seitlich einsetzbar und aushebbar ist.

## Beschreibung

Die Erfindung betrifft einen Trinkflaschenhalter für Fahrräder mit einem an einem Fahrradrahmen befestigbaren langgestreckten Basisteil und einem mit dem Basisteil verbundenen Halteteil zur vorzugsweise klemmenden mantelseitigen Halterung einer auf dem Basisteil abstützbaren Trinkflasche. Die Erfindung betrifft ferner ein Verfahren zur Herstellung eines Trinkflaschenhalters.

Es ist ein Trinkflaschenhalter dieser Art bekannt, bei welchem das Basisteil und das Halteteil aus einem biegefesten Drahtmaterial bestehen und einen Flaschenkäfig zum axialen Einführen und Entnehmen der Trinkflasche bilden. Üblicherweise wird ein solches Flaschenhalter in dem von den Rahmenrohren begrenzten Bereich montiert, wo er leicht zugänglich ist und den Radfahrer beim Treten nicht stört. Als nachteilig hat sich hierbei herausgestellt, daß vor allem bei Fahrrädern mit kleinem Rahmendreieck, wie Mountainbikes nicht genügend Raum zum Entnehmen insbesondere größerer Trinkflaschen zur Verfügung steht.

Ausgehend hiervon liegt der Erfindung die Aufgabe zugrunde, einen Flaschenhalter der eingangs genannten Art dahingehend zu verbessern, daß auch bei verschiedensten Rahmenabmessungen eine einfache, variable Handhabung beim Einsetzen und Entnehmen der Trinkflasche ermöglicht wird. Eine weiterer Aspekt der Erfindung besteht darin, ein Verfahren zur einfachen Herstellung eines solchen Flaschenhalters anzugeben.

Zur Lösung dieser Aufgabe werden die in den Patentansprüchen 1 und 14 angegebenen Merkmalskombinationen vorgeschlagen. Vorteilhafte Ausgestaltungen und Weiterbildungen der Erfindung ergeben sich aus den abhängigen Ansprüchen.

Die Erfindung geht von dem Gedanken aus, ein einfache und ergonomische Handhabung dadurch zu ermöglichen, daß die Trinkflasche an ihrem Mantel in radialer Richtung quer zur Rahmenebene in den Halter einzusetzen bzw. aus diesem auszulösen. Um dies zu ermöglichen, wird erfindungsgemäß vorgeschlagen, daß das Halteteil durch einen die Trinkflasche in Umfangsrichtung um mehr als 180° umspannenden bogenförmigen Klemmbügel gebildet ist, welcher an einem seiner Enden fest mit einem Zentralabschnitt des Basisteils verbunden ist, so daß die Trinkflasche an der zwischen dem freien Ende des Klemmbügels und dem Basisteil freigehaltenen spaltförmigen Bügelöffnung seitlich einsetzbar und aushebbar ist. Dabei ist auch eine sichere Halterung der Flasche zwischen dem Basisteil und dem sich darüber wölbenden Klemmbügel gewährleistet.

Um eine sichere Fixierung der Trinkflasche zu gewährleisten, ist es vorteilhaft, wenn die Weite der Bügelöffnung das 1,4- bis 1,8-fache, vorzugsweise das 1,7-fache des Radius des Klemmbügels beträgt. In dieser Hinsicht ist es weiter von Vorteil, wenn der Klemmbügel sich kreisbogenförmig über einen Winkelbereich von 190° bis 220°, vorzugsweise 210° über den Zentralabschnitt hinweg erstreckt.

Grundsätzlich ist es bei einem biegesteifen Flaschenhalter möglich, verformbare Flaschen durch die Bügelöffnung hindurchzudrücken. Um auch starre Flaschen verwenden zu können, wird in bevorzugter Ausgestaltung vorgeschlagen, daß der Klemmbügel biegeelastisch ausgebildet ist, und daß die Bügelöffnung beim mantelseitigen Einsetzen und Ausheben der Trinkflasche unter Aufbiegen des Klemmbügels aufweitbar ist. Eine weitere Erleichterung beim Einsetzen der Flasche ergibt sich dadurch, daß am freien Ende des Klemmbügels und an dem Zentralabschnitt des Basisteils jeweils eine die Bügelöffnung einseitig begrenzende Einführzunge angeordnet ist, wobei die Einführzungen von der Bügelöffnung weg nach außen divergierende Anlauf schrägen für die Trinkflasche bilden.

Bei einem einfach und kostengünstig herstellbaren Trinkflaschenhalter ist es vorgesehen, daß das Basisteil und der Klemmbügel als einstückiges Formteil vorzugsweise aus einem Metallflachmaterial ausgebildet sind. Dabei ist es weiter günstig, wenn das Formteil durch Umformen aus einem Aluminiumblechzuschnitt gebildet und an seiner Oberfläche eloxiert, pulverbeschichtet oder lackiert ist. Damit wird auch eine ästhetisch ansprechende Gestaltung ermöglicht.

Zur Sicherung der Trinkflasche gegen axiales Verschieben kann das Basisteil mit der Trinkflasche in Anlage oder in Eingriff bringbare Endabschnitte aufweisen. Vorteilhafterweise ist dabei ein Endabschnitt des Basisteils als vorzugsweise rechtwinklig abgekanteter Stützschenkel zur Anlage gegen den Boden der Trinkflasche ausgebildet. Um das Einführen der Flasche weiter zu vereinfachen, kann der Stützschenkel einen seitlich angeformten, zu seiner von dem Klemmbügel abgewandten Breitseite hin abgebogenen Lappen als Anlauffläche für die Bodenkante der Trinkflasche aufweisen.

Zum form- und/oder kraftschlüssigen Eingriff mit einem halsseitigen Abschnitt der Trinkflasche kann das Basisteil einen V-förmig gegenüber dem Zentralabschnitt hochgebogenen Endabschnitt aufweisen, welcher gegebenenfalls unter Auffedern auch ein Entnehmen und Einführen der Trinkflasche in axialer Richtung ermöglicht, wobei die Schenkel des Endabschnitts Anlaufschrägen bilden.

Die Schraubmontage am Fahrradrahmen kann dadurch vereinfacht werden, daß der plattenförmig ausgebildete Zentralabschnitt des Basisteils eine gegen ein Rahmenrohr des Fahrradrahmens ansetzbare Montagesicke aufweist, deren Sickengrund von zwei im Abstand voneinander angeordneten Anschrauböffnungen durchbrochen ist. Neben der versenkten Anordnung der Schraubenköpfe wird damit auch eine Aussteifung des Basisteils erreicht.

In baulicher wie in gestalterischer Hinsicht ist es von Vorteil, wenn der Klemmbügel aus einem Flachmaterial besteht und einen zu seinem freien Ende hin sich verjüngenden, trapezförmigen Umriß aufweist. Weiter ist es günstig, wenn der Klemmbügel über seine Länge mindestens eine, vorzugsweise zwei über einen Quersteg aneinander anschließende trapezförmige Ausnehmungen aufweist.

Im Hinblick auf ein Herstellungsverfahren wird die eingangs genannte Aufgabe dadurch gelöst, daß aus einer Metallplatte ein Zuschnittstück ausgeschnitten wird, welches ein langgestreckt-rechteckiges Basisteil und einen längsseitig an dem Basisteil abstehenden, vorzugsweise trapezförmigen Klemmbügel umfaßt, und daß in einem weiteren Verfahrensschritt der Klemmbügel durch Biegen bogenförmig umgeformt wird.

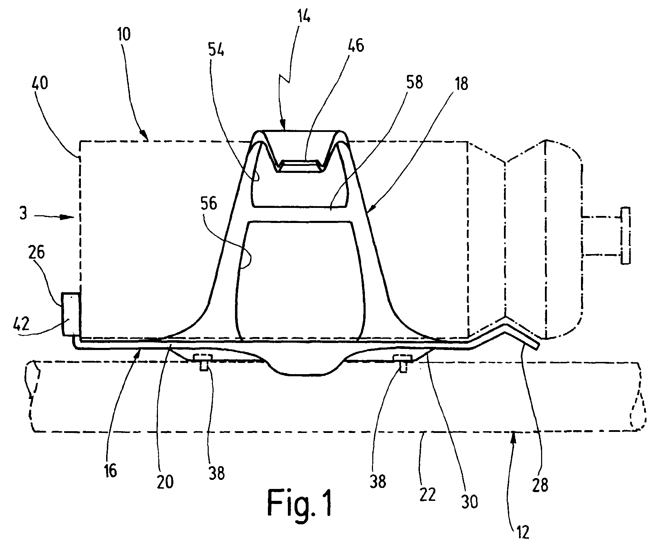

Im folgenden wird die Erfindung anhand eines in der Zeichnung in schematischer Weise dargestellten Ausführungsbeispiels näher erläutert. Es zeigen
- Fig. 1: einen Trinkflaschenhalter mit eingesetzter Trinkflasche an einem Rahmenrohr eines Fahrradrahmens in einer Seitenansicht;

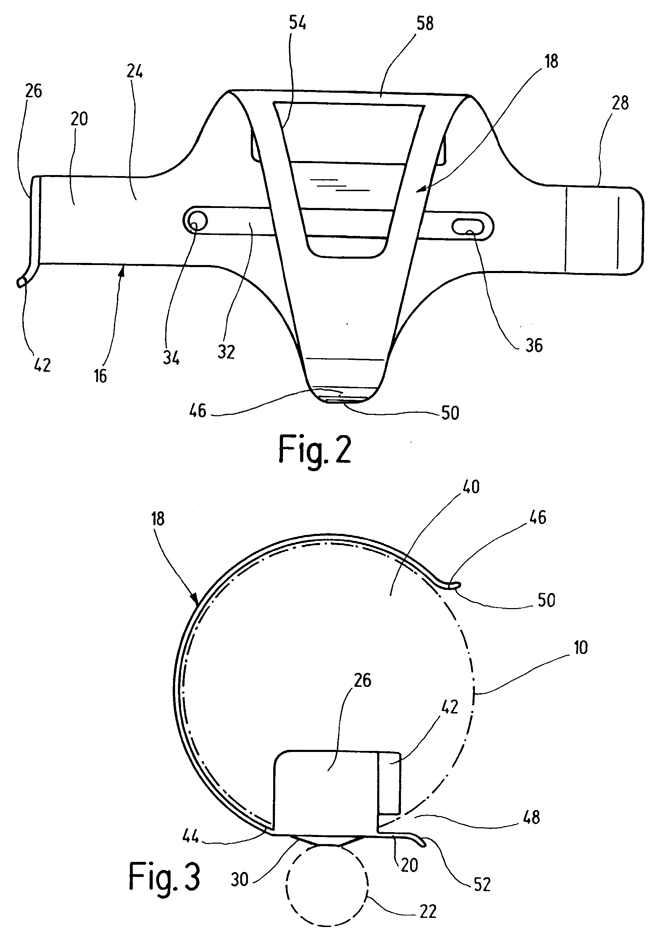

- Fig. 2: den Trinkflaschenhalter in einer gegenüber Fig. 1 um 90° gedrehten Draufsicht; und
- Fig. 3: eine Stirnseitenansicht des Trinkflaschenhalters in Richtung des Pfeils 3 in Fig. 1.

Der in der Zeichnung dargestellte Trinkflaschenhalter dient zur Halterung einer Trinkflasche 10 an einem Fahrradrahmen 12 und besteht als einstückiges Formteil 14 im wesentlichen aus einem langgestreckten Basisteil 16 und einem Klemmbügel 18.

Das Basisteil 16 umfaßt einen plattenförmigen, der Grundform nach rechteckigen Zentralabschnitt 20 zur Montage an einem Rahmenrohr 22 und zur mantelseitigen Abstützung der Trinkflasche 10 an einer Stützfläche 24 sowie zwei gegenüber dem Zentralabschnitt 20 abgebogene Endabschnitte 26, 28 zur Sicherung der Trinkflasche 10 gegen axiales Verschieben. Der Zentralabschnitt 20 ist mit einer in seiner Längsrichtung verlaufenden Montagesicke 30 versehen, deren Sickengrund 32 von zwei im Abstand voneinander angeordneten Anschrauböffnungen 34, 36 zur Aufnahme von in das Rahmenrohr 22 einschraubbaren Verbindungsschrauben 38 durchbrochen ist.

Ein Endabschnitt 26 des Basisteils 16 ist als zur Stützfläche 24 des Zentralabschnitts 20 hin rechtwinklig abgekanteter Stützschenkel zur Anlage gegen den Boden 40 der Trinkflasche 10 bestimmt. Ein an dem Stützschenkel 26 seitlich angeformter und in Verlängerung des Basisteils 16 abgebogener Lappen 42 dient als Einführschräge beim nachstehend weiter erläuterten Einsetzen der Trinkflasche 10. Der zweite Endabschnitt 28 des Basisteils 16 ist zum formschlüssigen Eingriff in eine Umfangsnut der Trinkflasche 10 oder gegebenenfalls zur kraftschlüssigen Anlage gegen eine nicht speziell ausgeformte Flasche V-förmig ausgebildet und dabei gegenüber der Stützfläche 24 schräg aufgekantet.

Der Klemmbügel 18 weist ausgehend von seinem längsseitig mit dem Zentralabschnitt 20 verbundenen Ende 44 einen zu seinem freien Ende 46 hin trapezförmig sich verjüngenden Seitenumriß auf und ist in Längsrichtung über einen Winkelbereich von etwa 210° kreisförmig über die Stützfläche 24 hinweg gebogen. Auf diese Weise wird zwischen dem freien Ende 46 des Klemmbügels 18 und der darunterliegenden freien Längskante des Zentralabschnitts 20 eine Bügelöffnung 48 spaltartig begrenzt, deren lichte Weite etwa das 1,7-fache des Radius des Klemmbügels 18 beträgt.

Der Klemmbügel 18 ist biegeelastisch ausgebildet, so daß sich die Trinkflasche 10 an ihrem Mantel in radialer Richtung unter elastischem Aufweiten der Bügelöffnung 48 in den Klemmbügel 18 einfedern bzw. aus diesem Ausheben läßt. Um das seitliche Einsetzen der Trinkflasche 10 weiter zu erleichtern, sind am freien Ende 46 des Klemmbügels 18 und an dem Zentralabschnitt 20 des Basisteils 16 die Bügelöffnung 48 einseitig begrenzende Einführzungen 50, 52 ausgebildet, die von der Bügelöffnung 48 weg nach außen divergierende Anlaufschrägen für die Trinkflasche 10 bilden. Um die erforderlichen Biegekräfte zu verringern, sind an dem Klemmbügel 18 zwei trapezförmige Ausnehmungen 54,56 ausgestanzt, die mit zueinander parallelen Grundseiten über einen Quersteg 58 aneinander anschließen. Damit ergibt sich eine ausreichend stabile Struktur, die zugleich ein geringes Gewicht aufweist und ästhetisch ansprechend gestaltet ist.
Zusammenfassend ist folgendes festzuhalten: Die Erfindung betrifft einen Trinkflaschenhalter für Fahrräder mit einem an einem Fahrradrahmen 12 betestigbaren langgestreckten Basisteil 16 und einem mit dem Basisteil 16 verbundenen Halteteil 18 zur vorzugsweise klemmenden mantelseitigen Halterung einer auf dem Basisteil 16 abstützbaren Trinkflasche 10. Um die Benutzung auch an Fahrradrahmen mit engem Rahmen zu erleichtern, wird vorgeschlagen, daß das Halteteil durch einen die Trinkflasche 10 in Umfangsrichtung um mehr als 180° umspannenden bogenförmigen Klemmbügel 18 gebildet ist, welcher an einem seiner Enden 44,46 fest mit einem Zentralabschnitt 20 des Basisteils 16 verbunden ist, so daß die Trinkflasche 10 an der zwischen dem freien Ende 46 des Klemmbügels 18 und dem Basisteil 16 freigehaltenen Bügelöffnung 48 quer zur Ebene des Fahrradrahmens 12 seitlich einsetzbar und aushebbar ist.

## Patentansprüche

1. Trinkflaschenhalter für Fahrräder mit einem an einem Fahrradrahmen (12) befestigbaren langgestreckten Basisteil (16) und einem mit dem Basisteil (16) verbundenen Halteteil (18) zur vorzugsweise klemmenden mantelseitigen Halterung einer auf dem Basisteil (16) abstützbaren Trinkflasche (10), **dadurch gekennzeichnet,** daß das Halteteil durch einen die Trinkflasche (10) in Umfangsrichtung um mehr als 180° umspannenden bogenförmigen Klemmbügel (18) gebildet ist, welcher an einem seiner Enden (44,46) fest mit einem Zentralabschnitt (20) des Basisteils (16) verbunden ist, so daß die Trinkflasche (10) an der zwischen dem freien Ende (46) des Klemmbügels (18) und dem Basisteil (16) freigehaltenen Bügelöffnung (48) seitlich einsetzbar und aushebbar ist.

2. Trinkflaschenhalter nach Anspruch 1, **dadurch gekennzeichnet,** daß die Weite der Bügelöffnung (48) das 1,4- bis 1,8-fache, vorzugsweise das 1,7-fache des Radius des Klemmbügels (18) beträgt.

3. Trinkflaschenhalter nach Anspruch 1 oder 2, **dadurch gekennzeichnet,** daß der Klemmbügel (18) sich kreisbogenförmig über einen Winkelbereich von 190° bis 220°, vorzugsweise 210° über den Zentralabschnitt (20) hinweg erstreckt.

4. Trinkflaschenhalter nach einem der Ansprüche 1 bis 3, **dadurch gekennzeichnet,** daß der Klemmbügel (18) biegeelastisch ausgebildet ist, und daß die Bügelöffnung (48) beim mantelseitigen Einsetzen und Ausheben der Trinkflasche (10) unter Aufbiegen des Klemmbügels (18) aufweitbar ist.

5. Trinkflaschenhalter nach einem der Ansprüche 1 bis 4, **dadurch gekennzeichnet,** daß am freien Ende (46) des Klemmbügels (18) und an dem Zentralabschnitt (20) des Basisteils (16) jeweils eine die Bügelöffnung (48) einseitig begrenzende Einführzunge (50,52) angeordnet ist, wobei die Einführzungen (50,52) von der Bügelöffnung (48) weg nach außen divergierende Anlaufschrägen für die Trinkflasche (10) bilden.

6. Trinkflaschenhalter nach einem der Ansprüche 1 bis 5, **dadurch gekennzeichnet,** daß das Basisteil (16) und der Klemmbügel (18) als einstückiges Formteil (14) vorzugsweise aus einem Metallflachmaterial ausgebildet sind.

7. Trinkflaschenhalter nach Anspruch 6, **dadurch gekennzeichnet,** daß das Formteil (14) durch Umformen aus einem Aluminiumblechzuschnitt gebildet und an seiner Oberfläche eloxiert, pulverbeschichtet oder lackiert ist.

8. Trinkflaschenhalter nach einem der Ansprüche 1 bis 7, **dadurch gekennzeichnet,** daß das Basisteil (16) mit der Trinkflasche (10) in Anlage oder in Eingriff bringbare Endabschnitte (26,28) zur Sicherung der Trinkflasche (10) gegen axiales Verschieben aufweist.

9. Trinkflaschenhalter nach Anspruch 8, **dadurch gekennzeichnet,** daß ein Endabschnitt (26) des Basisteils (16) als vorzugsweise rechtwinklig abgekanteter Stützschenkel zur Anlage gegen den Boden der Trinkflasche (10) ausgebildet ist.

10. Trinkflaschenhalter nach Anspruch 9, **dadurch gekennzeichnet,** daß der Stützschenkel (26) einen seitlich angeformten, zu seiner von dem Klemmbügel (18) abgewandten Breitseite hin abgebogenen Lappen (42) als Anlauffläche für die Trinkflasche (10) aufweist.

11. Trinkflaschenhalter nach einem der Ansprüche 1 bis 10, **dadurch gekennzeichnet,** daß das Basisteil (16) einen V-förmig gegenüber dem Zentralabschnitt (20) hochgebogenen Endabschnitt (28) zum form- und/oder kraftschlüssigen Eingriff mit einem halsseitigen Abschnitt der Trinkflasche (10) aufweist.

12. Trinkflaschenhalter nach einem der Ansprüche 1 bis 11, **dadurch gekennzeichnet,** daß der plattenförmig ausgebildete Zentralabschnitt (20) des Basisteils (16) eine gegen ein Rahmenrohr (22) des Fahrradrahmens (12) ansetzbare Montagesicke (30) aufweist, deren Sickengrund (32) von zwei im Abstand voneinander angeordneten Anschrauböffnungen (34,36) durchbrochen ist.

13. Trinkflaschenhalter nach einem der Ansprüche 1 bis 12, **dadurch gekennzeichnet,** daß der Klemmbügel (18) aus einem Flachmaterial besteht und einen zu seinem freien Ende (46) hin sich verjüngenden, trapezförmigen Umriß aufweist.

14. Trinkflaschenhalter nach Anspruch 13, **dadurch gekennzeichnet,** daß der Klemmbügel (18) über seine Länge mindestens eine, vorzugsweise zwei über einen Quersteg (58) aneinander anschließende trapezförmige Ausnehmungen (54,56) aufweist.

15. Verfahren zur Herstellung eines Trinkflaschenhalters nach einem der vorhergehenden Ansprüche, **dadurch gekennzeichnet,** daß aus einer Metallplatte ein Zuschnittstück (14) ausgeschnitten wird, welches ein langgestreckt-rechteckiges Basisteil (16) und einen längsseitig an dem Basisteil (16) abstehenden, vorzugsweise trapezförmigen Klemmbügel (18) umfaßt, und daß in einem weiteren Verfahrensschritt der Klemmbügel (18) durch Biegen bogenförmig umgeformt wird.
